(19) Europäisches Patentamt / European Patent Office / Office européen des brevets

(11) **EP 4 229 544 B1**

(12) **FASCICULE DE BREVET EUROPEEN**

(45) Date de publication et mention
de la délivrance du brevet:
**24.12.2025 Bulletin 2025/52**

(21) Numéro de dépôt: **21790497.8**

(22) Date de dépôt: **13.10.2021**

(51) Classification Internationale des Brevets (IPC):
*G06V 20/58* *(2022.01)*

(52) Classification Coopérative des Brevets (CPC):
**G06V 20/584**

(86) Numéro de dépôt international:
**PCT/EP2021/078342**

(87) Numéro de publication internationale:
**WO 2022/079113 (21.04.2022 Gazette 2022/16)**

(54) **PROCEDE DE TRAITEMENT D'IMAGES POUR DÉCLARER UNE ZONE SEGMENTÉE COMME GYROPHARE**

BILDVERARBEITUNGSVERFAHREN, UM EINEN SEGMENTIERTEN BEREICH ALS UMLAUFENDES LICHT ZU DEKLARIEREN

METHOD FOR PROCESSING IMAGES TO DECLARE A SEGMENTED AREA AS REVOLVING LIGHT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.10.2020 FR 2010472**

(43) Date de publication de la demande:
**23.08.2023 Bulletin 2023/34**

(73) Titulaire: **AUMOVIO Autonomous Mobility Germany GmbH**
**85057 Ingolstadt (DE)**

(72) Inventeurs:
• **GODREAU, Bertrand**
**31100 TOULOUSE (FR)**
• **RONY, Sophie**
**31100 TOULOUSE (FR)**
• **CARON, Thibault**
**31100 TOULOUSE (FR)**
• **HIJAZI, Bilal**
**31100 TOULOUSE (FR)**

(74) Mandataire: **Aumovio Corporation**
**AUMOVIO Germany GmbH**
**Taunusstraße 36**
**80807 München (DE)**

(56) Documents cités:
**EP-A1- 2 523 173       EP-A2- 1 251 032**
**US-A1- 2016 252 905**

• **TANTALO J ET AL: "Brake Light Detection by Image Segmentation", 17 December 2006 (2006-12-17), pages 1 - 4, XP002605237, Retrieved from the Internet <URL:http://www. johntantalo.com/blog/wp-content/uploads/2006/ 12/brakedetection.pdf> [retrieved on 20101011]**

EP 4 229 544 B1

**Description**

**Domaine technique**

La présente invention concerne un procédé de traitement d'images notamment pour la détection de véhicules d'urgence.

**Technique antérieure**

De nos jours, il est connu d'équiper un véhicule automobile d'un système d'assistance à la conduite appelé communément ADAS (« Advanced Driver Assistance System » en anglais). Un tel système comprend de manière connue un dispositif d'imagerie telle qu'une caméra montée sur le véhicule, qui permet de générer une série d'images représentant l'environnement du véhicule. Par exemple, une caméra montée à l'arrière du véhicule permet de filmer l'environnement arrière du véhicule et notamment les véhicules suiveurs. Ces images sont ensuite exploitées par une unité de traitement dans le but d'assister le conducteur, par exemple en détectant un obstacle (piétons, véhicule à l'arrêt, objets sur la route, etc.) ou bien en estimant le temps avant collision avec les obstacles. Les informations données par les images acquises par la caméra doivent donc être suffisamment fiables et pertinentes pour permettre au système d'assister le conducteur du véhicule.

Notamment, la plupart des législations internationales stipulent qu'un conducteur ne doit pas bloquer le passage des véhicules prioritaires en opération (encore appelés véhicules d'urgence, tels que camions de pompiers, ambulances, véhicules de police, ...) et doit faciliter leur circulation. De la sorte, il est opportun que les systèmes ADAS puissent reconnaitre de tels véhicules prioritaires, d'autant plus lorsque leurs lumières (gyrophares) sont activées, afin de ne pas obstruer leur intervention.

Dans les systèmes ADAS actuels comprenant une caméra filmant l'avant ou l'arrière du véhicule, les véhicules prioritaires sont détectés de la même manière que les autres véhicules standards (non prioritaires). Ces systèmes mettent généralement en œuvre une combinaison d'approches d'apprentissage machine (« machine learning » en langue anglaise) avec des approches de perception géométrique. Les images issues de ces caméras sont traitées pour extraire des boîtes englobantes autour de tout type de véhicule (voitures particulières, camions, bus, motos, etc.), y compris les véhicules d'urgence, de sorte que, les systèmes ADAS existant ne permettent pas de distinguer de manière fiable un véhicule suiveur prioritaire d'un véhicule suiveur standard.

De plus, ces systèmes sont soumis à des problèmes d'occultations temporelles partielles ou totales des images acquises par la caméra et liées au fait qu'un véhicule prioritaire n'est pas tenu de respecter les règles de circulation classiques et peut zigzaguer entre les voies, réduire les distances de sécurité ou circuler entre deux voies, de sorte que les systèmes existants ne sont pas adaptés à de tels comportements et circonstances.

Encore, la détection des véhicules prioritaires ou véhicules d'urgence est difficile car il existe une variété importante de types de véhicules prioritaires. En effet, ces véhicules sont caractérisés par leurs gyrophares qui sont soit à LED, soit à ampoule, qui peuvent être soit fixes, soit rotatifs, qui sont de différentes couleurs et de dispositions variables sur le véhicule. Par exemple, certains véhicules sont équipés d'un seul gyrophare, d'autres de paires de gyrophares, d'autres encore de barres comprenant plus de deux gyrophares, etc. Ce problème de variabilité, rend d'autant plus difficile une détection fiable des véhicules prioritaires pour les systèmes ADAS existant.

A cela s'ajoutent des problèmes de détection pour les scènes sur lesquelles s'ajoutent des phares avant et feux arrière d'autres véhicules et toutes autres lumières présentes dans l'environnement arrière du véhicule et pouvant augmenter la difficulté de la détection des gyrophares des véhicules prioritaires connue du brevet EP2523173 A1.

**Présentation de l'invention**

La présente invention propose donc un procédé de traitement d'images pour la détection de véhicules prioritaires rapide et fiable quel que soit le type de véhicule prioritaire et quelles que soient les conditions dans lesquelles il circule, notamment par la détection des éclairages (gyrophares) de ces véhicules.

Selon l'invention ce but est atteint grâce à un procédé de traitement d'un flux vidéo d'images capturées par au moins une caméra couleur embarquée dans un véhicule automobile, lesdites images étant exploitées par un calculateur embarqué dans ledit véhicule pour détecter un véhicule prioritaire situé dans l'environnement du véhicule, l'au moins une caméra étant orientée vers l'arrière du véhicule, ledit procédé étant caractérisé en ce qu'il comporte les étapes suivantes :

- une étape d'acquisition d'une séquence d'images ;

pour chaque image de la séquence d'images :

- une étape de segmentation colorimétrique par seuillage permettant la détection de zones lumineuses colorées de l'image susceptibles d'être des gyrophares ;
- une étape de suivi de chaque zone lumineuse segmentée selon laquelle chaque zone lumineuse segmentée lors de l'étape de segmentation est associée à une zone lumineuse de prédiction de même couleur ;
- une étape de classification colorimétrique, par un classifieur préalablement entrainé, de chaque zone lumineuse segmentée ;
- une étape d'analyse fréquentielle de chaque zone lumineuse segmentée permettant de déterminer un caractère clignotant de ladite zone lumineuse segmentée ;
- une étape de calcul d'un indice de confiance global de chaque image de la séquence d'images, prenant en compte un indice de confiance de classification issu de l'étape de classification colorimétrique, permettant de déclarer une zone lumineuse segmentée comme étant un gyrophare.

Le procédé selon l'invention permet ainsi de détecter de manière fiable les gyrophares d'un véhicule d'urgence quelles que soient les conditions de luminosité et de météo, et ce jusqu'à une distance de 150 mètres.

Selon un exemple de réalisation, lors de l'étape de segmentation, des seuils de segmentation prédéfinis sont utilisés de sorte à segmenter les zones lumineuses selon quatre catégories :

- la couleur rouge,
- la couleur orange,
- la couleur bleue, et
- la couleur violette.

Selon un mode de réalisation, après l'étape de segmentation, le procédé comporte encore une étape de filtrage dite de post-segmentation permettant de filtrer les résultats issus de l'étape de segmentation, cette étape de post-segmentation étant réalisée selon des critères de position, et/ou de taille et/ou de couleur et/ou d'intensité prédéterminés. Cette étape de filtrage permet de réduire les fausses détections.

Selon un exemple de réalisation, l'étape de post-segmentation comprend une sous étape de filtrage dimensionnel dans laquelle les zones lumineuses situées dans des parties de l'image éloignées d'une ligne d'horizon et d'un point de fuite et présentant une taille inférieure à un seuil dimensionnel prédéterminé, sont filtrées. Cette étape permet d'éliminer des candidats correspondant à des objets perçus par la caméra qui correspondent à un bruit de mesure.

Selon un exemple de réalisation, l'étape de post-segmentation comprend une sous étape de filtrage des zones lumineuses présentant une taille supérieure à un seuil dimensionnel prédéterminé et une intensité lumineuse inférieure à un seuil d'intensité lumineuse prédéterminé. Cette étape permet d'éliminer des candidats qui, bien que proche du véhicule, ne présentent pas l'intensité lumineuse requise pour être des gyrophares.

Selon un exemple de réalisation, l'étape de post-segmentation comprend une sous étape de filtrage positionnel dans laquelle les zones lumineuses positionnées en-dessous d'une ligne d'horizon définie sur l'image de la séquence d'images sont filtrées. Cette étape permet d'éliminer des candidats correspondants à des phares d'un véhicule suiveur.

Selon un mode de réalisation, l'étape de post-segmentation comprend, pour une zone lumineuse segmentée, une sous étape de filtrage par seuillage chromatique orienté. Ce filtrage spécifique permet de filtrer les couleurs de manière plus précise. Par exemple pour la couleur bleue, de filtrer un grand nombre de faux positifs dans la détection de zones lumineuses classées de couleur bleue dus au fait que la lumière blanche émise par les feux avant des véhicules suiveurs peut être perçue comme étant de couleur bleue par la caméra.

Selon un mode de réalisation, le procédé comprend encore une étape de seconde segmentation, à l'issue de l'étape de suivi, pour chaque zone lumineuse segmentée pour laquelle aucune association n'a été trouvée.

Selon un exemple de réalisation, l'étape de seconde segmentation comprend :

- une première sous étape dans laquelle les seuils de segmentation sont élargis et les étapes de segmentation et de suivi sont renouvelées pour chaque image de la séquence d'images avec ces nouveaux seuils de segmentation élargis, les seuils de segmentation étant ceux correspondant à la couleur de la zone lumineuse segmentée, et

- si à l'issu de cette première sous étape aucune association n'a été trouvée, une seconde sous étape dans laquelle les seuils de segmentation sont modifiés de sorte à correspondre à ceux de la couleur blanche.

Cette étape permet de confirmer les zones lumineuses segmentées (détectées) lors de la segmentation. En effet, cette dernière vérification permet de s'assurer que la fausse détection en était bien une et qu'il ne s'agissait pas là d'un phare de véhicule suiveur par exemple.

Selon un exemple de réalisation, lors de l'étape d'analyse fréquentielle, une fréquence de clignotement de chaque zone lumineuse segmentée est comparée à un premier seuil de fréquence et à un second seuil de fréquence supérieur au premier seuil de fréquence, prédéterminés, une zone lumineuse segmentée étant filtrée si :

- sa fréquence de clignotement est inférieure au premier seuil de fréquence, de sorte que la zone lumineuse segmentée est considérée comme étant non clignotante ou faiblement clignotante et donc comme n'étant pas un gyrophare ;

- sa fréquence de clignotement est supérieure au second seuil de fréquence, de sorte que la zone lumineuse segmentée est également considérée comme n'étant pas un gyrophare.

Selon un exemple de réalisation, le premier seuil de fréquence est égal à 1 Hz et le second seuil fréquence est égal à 5 Hz.

Selon un exemple de réalisation, le procédé comprend encore une étape d'analyse directionnelle de chaque zone lumineuse segmentée permettant de déterminer un déplacement de ladite zone lumineuse segmentée

Selon un exemple de réalisation, une zone lumineuse segmentée est filtrée si la direction de déplacement obtenue lors de l'étape d'analyse directionnelle permet de conclure à :

- une immobilisation de la zone lumineuse segmentée, par rapport au véhicule ;
- un éloignement de la zone lumineuse segmentée, par rapport au véhicule.

L'invention concerne encore un produit programme d'ordinateur, comprenant des instructions pour la mise en œuvre d'un procédé comprenant :

- une étape d'acquisition d'une séquence d'images ;

pour chaque image de la séquence d'images :

- une étape de segmentation colorimétrique par seuillage permettant la détection de zones lumineuses colorées de l'image susceptibles d'être des gyrophares ;
- une étape de suivi de chaque zone lumineuse segmentée selon laquelle chaque zone lumineuse segmentée lors de l'étape de segmentation est associée à une zone lumineuse de prédiction de même couleur ;
- une étape de classification colorimétrique, par un classifieur préalablement entrainé, de chaque zone lumineuse segmentée ;
- une étape d'analyse fréquentielle de chaque zone lumineuse segmentée permettant de déterminer un caractère clignotant de la zone lumineuse segmentée ;
- une étape de calcul d'un indice de confiance global de chaque image de la séquence d'images, prenant en compte un indice de confiance de classification issu de l'étape de classification colorimétrique, permettant de déclarer une zone lumineuse comme étant un gyrophare, lorsqu'il est mis en œuvre par un calculateur.

L'invention concerne également un véhicule, comprenant au moins une caméra couleur orientée vers l'arrière du véhicule et apte à acquérir un flux vidéo d'images d'un environnement arrière du véhicule et au moins un calculateur, le calculateur étant configuré pour mettre en œuvre :

- une étape d'acquisition d'une pluralité d'images ;

pour chaque image de la séquence d'images :

- une étape de segmentation colorimétrique par seuillage, permettant la détection de zones lumineuses colorées de l'image susceptibles d'être des gyrophares ;
- une étape de suivi de chaque zone lumineuse segmentée selon laquelle chaque zone lumineuse segmentée lors de l'étape de segmentation est associée à une zone lumineuse de prédiction de même couleur ;
- une étape de classification colorimétrique, par un classifieur préalablement entrainé, de chaque zone lumineuse segmentée;
- une étape d'analyse fréquentielle de chaque zone lumineuse segmentée permettant de déterminer un caractère clignotant de la zone lumineuse segmentée ;
- une étape de calcul d'un indice de confiance global de chaque image de la séquence d'images, prenant en compte un indice de confiance de classification issu de l'étape de classification colorimétrique, permettant de déclarer une zone lumineuse segmentée comme étant un gyrophare.

**Brève description des dessins**

D'autres caractéristiques, détails et avantages apparaîtront à la lecture de la description détaillée ci-après, et à l'analyse des dessins annexés, sur lesquels :

[Fig. 1] La figure 1 est une représentation schématique d'un véhicule selon l'invention et d'un véhicule prioritaire.

[Fig. 2] La figure 2 représente un exemple de mise en œuvre du procédé selon l'invention.

[Fig. 3] La figure 3 illustre un exemple de réalisation de l'étape de post-segmentation du procédé selon l'invention.

[Fig. 4] La figure 4 illustre un exemple de réalisation de l'étape de seconde segmentation du procédé selon l'invention.

[Fig. 5a] La figure 5a illustre une première image de la séquence d'images traitée par le procédé selon l'invention.

[Fig. 5b] La figure 5b illustre une seconde image de la séquence d'images traitée par le procédé selon l'invention.

[Fig. 5c] La figure 5c illustre une troisième image de la séquence d'images traitée par le procédé selon l'invention.

[Fig. 6] La figure 6 illustre une machine d'état sous forme d'hystérésis.

[Fig. 7] La figure 7 illustre une autre machine d'état sous forme d'hystérésis.

[Fig. 8] La figure 8 illustre un espace colorimétrique (U,V).

**Description des modes de réalisation**

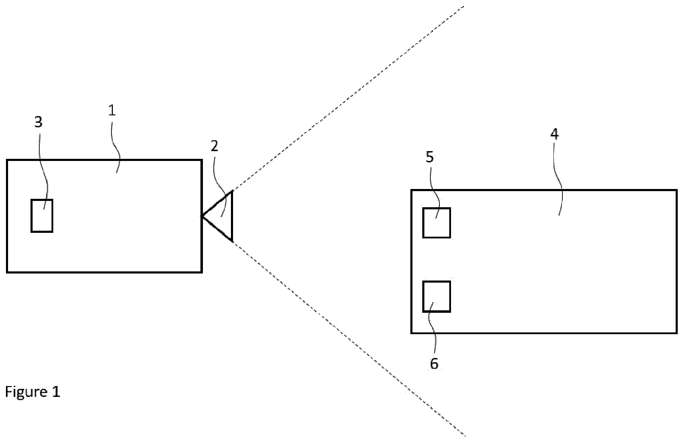

Sur la figure 1, est représentée, schématiquement, un véhicule 1 muni d'une caméra couleur 2, orientée vers l'arrière du véhicule 1 et apte à acquérir des images de l'environnement arrière du véhicule 1, et au moins un calculateur 3 configuré pour exploiter les images acquises par la caméra 2. Sur cette figure 1, un véhicule d'urgence, ou véhicule prioritaire, 4 est positionné derrière le véhicule 1, dans le champ de vision de la caméra 2. A noter que cette position relative entre le véhicule 1 et le véhicule d'urgence 4 illustrée à la figure 1 n'est nullement limitative.

Un véhicule prioritaire se caractérise par des spots lumineux 5, 6, encore appelés gyrophares, émettant dans le bleu, le rouge ou l'orange. Dans tous les pays, ces couleurs sont utilisées par les véhicules prioritaires. Les véhicules prioritaires peuvent comporter un ou plusieurs gyrophares dont les agencements peuvent varier en fonction du nombre de gyrophares dont ils sont équipées (soit un seul gyrophare, soit une paire de gyrophares distincts, éloignés l'un de l'autre, soit une pluralité de gyrophares alignés et proches les uns des autres), et de l'emplacement de ces gyrophares sur la carrosserie du véhicule prioritaire (sur le toit du véhicule prioritaire, sur le pare choc avant du véhicule prioritaire , ...). Les gyrophares sont également de plusieurs sortes. Ils peuvent être à LED ou à ampoule.

Les gyrophares des véhicules prioritaires sont également définis par leur caractère clignotant, alternant entre des phases allumées et des phases éteintes.

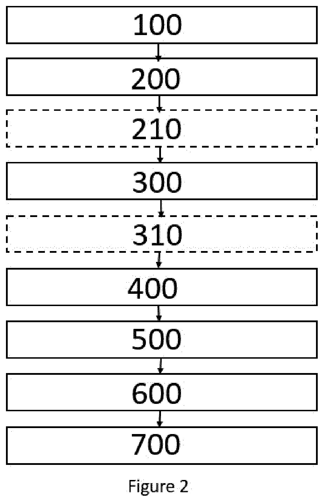

Le procédé selon l'invention va être maintenant décrit en référence aux figures 2 à 8.

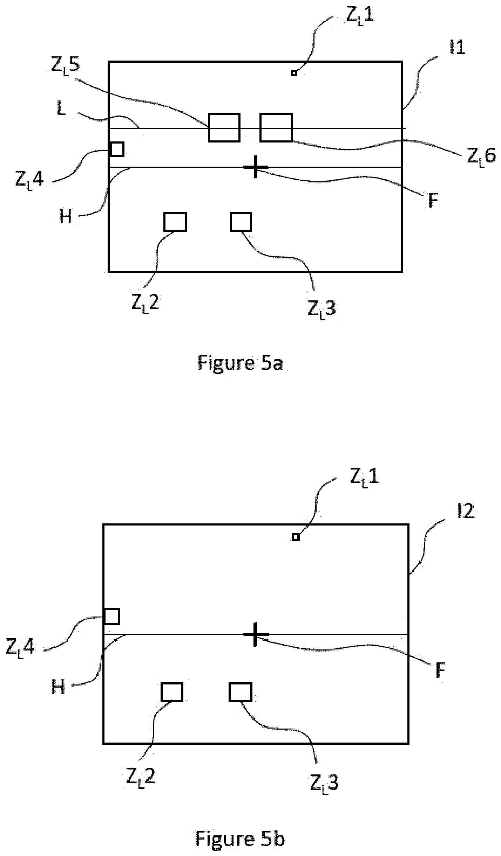

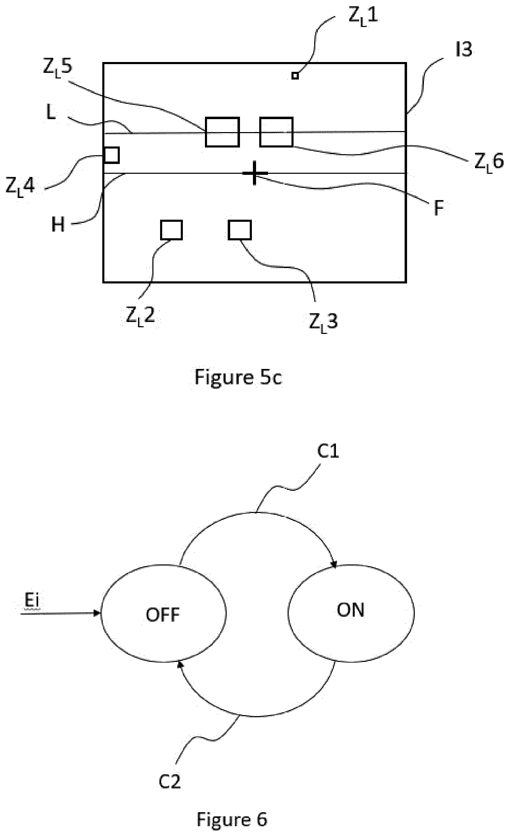

Le procédé selon l'invention comprend une étape 100 d'acquisition d'une séquence d'images, comprenant par exemple une première image I1, une deuxième image I2, postérieure à la première image 11, et une troisième image I3 postérieure à la deuxième image I2. De telles images I1, I2 et I3 sont représentées aux figures 5a, 5b et 5c, respectivement.

Le procédé selon l'invention comprend une étape 200 de segmentation colorimétrique par seuillage.

Cette étape 200 de segmentation permet, à l'aide de seuils de segmentation prédéfinis, de détecter et segmenter des zones lumineuses $Z_L$i dans chaque image de la sélection d'images. Cette segmentation colorimétrique est réalisée selon quatre catégories de couleur :

- la couleur rouge,

- la couleur orange,

- la couleur bleue, et

- la couleur violette.

La couleur violette est notamment utilisée pour détecter certains gyrophares spécifiques avec une chromaticité différente. Par exemple, les gyrophares à ampoules, perçus comme étant bleus à l'œil nu, peuvent être perçus comme étant violets par les caméras.

Pour s'adapter à la variabilité importante des gyrophares des véhicules prioritaires, les seuils utilisés lors de l'étape 200 de segmentation sont étendus par rapport à des seuils classiquement utilisés pour la reconnaissance des feux de signalisation par exemple. Ces seuils de segmentation sont prédéfinis, pour chaque couleur, pour la saturation, pour l'intensité lumineuse, et pour la chrominance.

L'étape 200 de segmentation donne la position dans l'image, l'intensité et la couleur des zones lumineuses segmentées $Z_L i$ du véhicule d'urgence, lorsque ceux-ci sont allumés.

Comme cela est représenté à la figure 5a, à l'issu de l'étape 200 de segmentation colorimétrique, une pluralité de zones lumineuses colorées $Z_L 1$, $Z_L 2$, $Z_L 3$, $Z_L 4$, $Z_L 5$ et $Z_L 6$ sont détectées dans la première image I1, susceptibles d'être des gyrophares de véhicules prioritaires.

L'extension des valeurs de seuils utilisés pour l'étape de segmentation permet de s'adapter à la variabilité des gyrophares des véhicules prioritaires afin d'être sensible à un plus grand intervalle de nuances de couleurs. Cependant, cette extension induit un important bruit lors de l'étape 200 de segmentation.

Pour réduire le nombre de candidats potentiels à la détection de gyrophares de véhicules prioritaires, autrement dit pour réduire le nombre de faux positifs, le procédé selon l'invention comporte une étape 210 de post-segmentation. Cette étape 210 de post-segmentation permet un filtrage basé sur des critères prédéterminés de position des zones lumineuses $Z_L i$ dans l'image considérée, et/ou de taille des zones lumineuses $Z_L i$ et/ou de couleur des zones lumineuses $Z_L i$ et/ou d'intensité des zones lumineuses $Z_L i$.

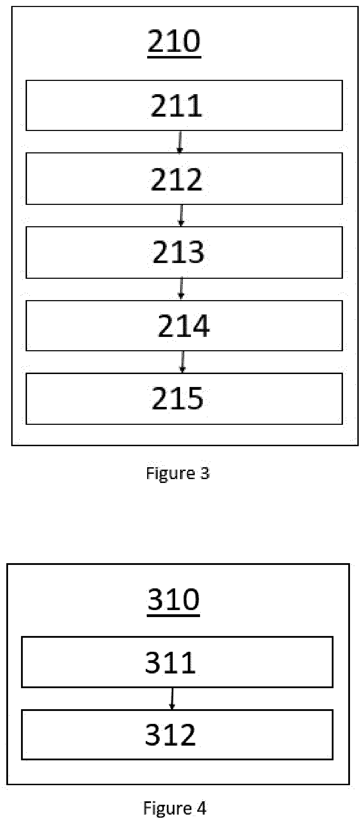

En référence à la figure 3, l'étape 210 de post-segmentation comprend une sous-étape de filtrage dimensionnel 211 dans laquelle les zones lumineuses $Z_L i$ présentant une taille inférieure à un seuil dimensionnel prédéterminé, par exemple une taille inférieure à 20 pixels (dites de petite taille) sont filtrées. Ce filtrage dimensionnel est notamment effectué dans des portions de l'image éloignées d'une ligne d'horizon H qui représente l'infini, et d'un point de fuite F, à savoir sur les bords de l'image. Autrement dit, ce filtre permet de retirer les zones lumineuses $Z_L i$ de petite taille qui sont présentes dans une portion de l'image où il n'est pas commun de rencontrer des zones lumineuses $Z_L i$ de petite taille. En effet, lorsque des zones lumineuses $Z_L i$ de petites tailles sont présentes dans une image, elles correspondent à des lumières éloignées par rapport au véhicule 1 lorsque ces zones lumineuses $Z_L i$ sont proches de la ligne d'horizon H. Ainsi, une zone lumineuse $Z_L i$ de petite taille qui ne serait pas proche de la ligne d'horizon H ne correspondrait donc pas à une lumière de l'environnement éloignée par rapport au véhicule 1 mais à un bruit de mesure, d'où l'intérêt de filtrer une telle zone lumineuse $Z_L i$. Cela est donc le cas de la zone lumineuse $Z_L 1$ illustrée à la figure 5a.

De plus, comme mentionné précédemment, les zones lumineuses correspondant à des lumières lointaines se trouvent proche de la ligne d'horizon H et du point de fuite F de l'image I1. De la sorte, les zones lumineuses se trouvant trop loin de cette ligne d'horizon H et de ce point de fuite F, notamment sur les bords latéraux de l'image I1, sont également filtrés, lorsqu'elles présentent une taille inférieure au seuil dimensionnel prédéterminé. Cela est donc le cas de la zone lumineuse $Z_L 4$ illustrée à la figure 5a.

L'étape 210 de post-segmentation comprend une sous-étape 212 de filtrage des zones lumineuses présentant une intensité lumineuse inférieure à un seuil d'intensité lumineuse prédéterminé, par exemple présentant une intensité lumineuse inférieure à 1000 lux, lorsque ces zones lumineuses $Z_L i$ présentent une taille supérieure à un seuil prédéterminé, par exemple une taille supérieure à 40 pixels. En effet, les zones lumineuses filtrées lors de la sous-étape 212, bien que présentant une taille dans l'image correspondant à une proximité de la lumière par rapport au véhicule 1 dans la scène arrière filmée par la caméra 2, ne présentent pas l'intensité lumineuse nécessaire pour être des candidats intéressants pour être des gyrophares de véhicules prioritaires. Une zone lumineuse segmentée $Z_L i$ de faible intensité mais suffisamment proche du véhicule 1 pour présenter une taille dite importante dans l'image peut par exemple correspondre à une simple réflexion de rayons du soleil sur un support.

L'étape 210 de post-segmentation comprend encore une sous-étape 213 de filtrage positionnel dans laquelle les zones lumineuses positionnées en-dessous de la ligne d'horizon H sont filtrées. Cela est donc le cas de la zone lumineuse $Z_L 2$ et $Z_L 3$ illustrées à la figure 5a. En effet, une telle position (en dessous de la ligne d'horizon H) des zones lumineuses est caractéristique des phares avant de véhicules suiveurs notamment, et non pas de gyrophares de véhicules prioritaires qui eux, sont positionnés au-dessus de la ligne d'horizon H.

L'étape 210 de post-segmentation peut encore comprendre une sous-étape 214 de filtrage de zones lumineuses conflictuelles. Au moins deux zones lumineuses sont en conflit lorsqu'elles sont proches, s'intersectionnent ou si l'une est incluse dans l'autre. Lorsqu'un tel conflit est constaté, seule l'une de ces deux zones lumineuses est conservée, l'autre étant alors filtrée. La zone lumineuse parmi les deux zones en conflit devant être supprimée est déterminée, de manière connue en soi, selon des critères prédéterminés de luminosité, de taille et de couleur de ladite zone.

L'étape 210 de post-segmentation comprend, pour une zone lumineuse segmentée, une sous-étape 215 de filtrage par seuillage chromatique orienté.

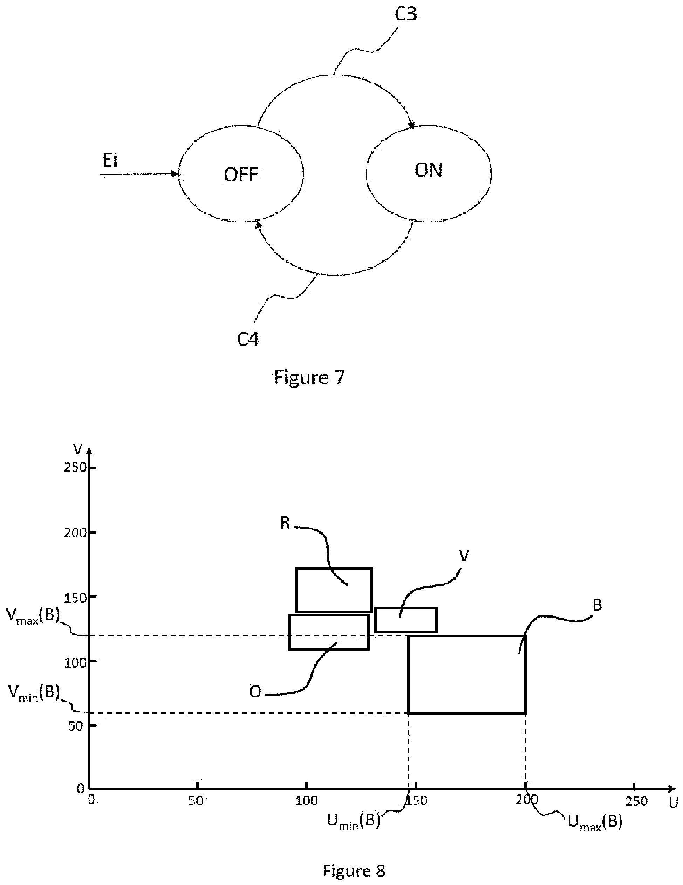

En référence à la figure 8, un espace colorimétrique (U,V) compris entre 0 et 255 est illustré. Chaque couleur, R pour rouge, V pour violet, B pour bleu et O pour orange, est déterminée dans cet espace colorimétrique selon des valeurs seuils $U_{max}$, $U_{min}$, $V_{max}$, $V_{min}$. Par exemple, pour la couleur bleue, $U_{max}(B)$, $U_{min}(B)$, $V_{max}(B)$, $V_{min}(B)$.

Cette définition des couleurs par des valeurs minimum et maximum sur les axes U et V crée des blocs rectangulaires de couleur qui ne sont pas représentatifs de la réalité et donc pas adaptés. Il est donc nécessaire de réaliser, pour chaque couleur, un filtrage chromatique. Le filtrage par seuillage chromatique orienté revient à ajuster, pour chaque couleur, les valeurs minimum et maximum sur les axes U et V de l'espace colorimétrique des blocs de couleur. Ainsi, le risque de fausses détections du fait de la proximité des blocs de couleurs (proximité des valeurs U et V entre les couleurs dans l'espace colorimétrique (U,V) est diminué. Par exemple, on cherche, avec ce filtre chromatique orienté, à filtrer les couleurs de bleu B trop proches de la couleur violet V, les couleurs de rouge R trop proches de la couleur orange O, et ainsi de suite.

Ce filtrage chromatique orienté permet d'affiner la définition des couleurs et, par conséquent, de filtrer un grand nombre de faux positifs dans la détection de zones lumineuses.

Ainsi, ne sont retenues, après la mise en œuvre des sous-étapes susmentionnées le l'étape 210 de post-segmentation, comme des candidats potentiels pour être des gyrophares de véhicules prioritaires, que des zones lumineuses $Z_L$i qui sont :

- d'une taille suffisamment importante (supérieure à 20 pixels) ;

- positionnées au-dessus de la ligne d'horizon H ;

- suffisamment lumineuses (intensité lumineuse supérieure à 1000 lux) ;

- et dont la chromaticité est assurée (avec des valeurs U et V adaptées pour éviter les faux positifs).

Il est à noter que toutes les sous étapes ne sont pas toujours nécessairement mises en œuvre pour réalisation du procédé selon l'invention mais que seules certaines d'entre elles, seules ou en combinaison, pourraient être retenues, au cas par cas, selon la complexité de l'image traitée.

L'étape 300 est une étape de suivi de chaque zone lumineuse ZLi détectée dans chaque image. De manière connue de l'Homme du Métier, une position attendue des zones lumineuses $Z_L$i segmentées dans l'image lors de l'étape 200 de segmentation est calculée par le calculateur 3 et est utilisée pour s'assurer qu'un feu détecté dans une image In correspond bien à une même zone lumineuse segmentée dans une image précédente In-1 et qui se serait déplacé. La position attendue des zones lumineuses est déterminée à l'aide d'une prédiction. La position attendue de la zone lumineuse segmentée dans l'image courante In est calculée à partir de la position de la zone lumineuse dans l'image précédente In-1 à laquelle on ajoute un vecteur correspondant au déplacement de la zone lumineuse entre l'image In-2 et l'image In-1, compte tenu du déplacement du véhicule 1.

De plus, comme cela sera expliqué ci-après, les gyrophares de véhicules prioritaires sont notamment caractérisés par la fréquence de clignotement de leurs gyrophares. Or, afin de pouvoir estimer la fréquence de clignotement des gyrophares, il est nécessaire de pouvoir estimer l'évolution de leur luminosité (alternance de phases d'éclairage et de phases de non-éclairage) au cours du temps. L'étape 200 de segmentation nous donne la position dans l'image, l'intensité et la couleur de ces zones lumineuses segmentées $Z_L$i seulement lorsque celles-ci correspondent à des phases où les gyrophares sont allumés. L'étape 300 de suivi permet d'associer les gyrophares d'une image à une autre, ainsi que d'extrapoler leurs positions lorsqu'ils sont dans une phase de non-éclairage (éteints).

Cette étape 300 de suivi, connue de l'état de la technique, présente des seuils adaptés au caractère clignotant des gyrophares et permet notamment d'associer les zones lumineuses des gyrophares d'une image à une autre image, ainsi que d'extrapoler leurs positions lorsque les gyrophares sont dans une phase éteinte (correspondant à une absence de zone lumineuse correspondante dans l'image).

Chaque zone lumineuse $Z_L$i segmentée lors de l'étape 200 de segmentation est associée, de manière connue en soi, à une zone lumineuse de prédiction $Z_P$i de même couleur.

Pour chaque zone lumineuse segmentée $Z_L$i dont aucune association n'a été trouvée avec une zone lumineuse de prédiction Zpi lors de l'étape 300 de suivi, une étape 310 de seconde segmentation est mise en œuvre, à l'issue de l'étape 300 de suivi.

Cette étape 310 de seconde segmentation comprend une première sous-étape 311 dans laquelle les seuils de segmentation sont élargis (autrement dit, les seuils de segmentation sont définis de sorte à être moins stricts, moins filtrant) et les étapes 200 de segmentation et 300 de suivi sont renouvelées pour chaque image de la séquence d'images, avec ces nouveaux seuils de segmentation élargis. Cette étape permet la détection d'une zone lumineuse segmentée $Z_L$i dans une zone de segmentation de prédiction Zpi.

Si à l'issu de cette première sous-étape 311, toujours aucune association n'est trouvée entre la zone lumineuse segmentée $Z_L$i traitée et une zone lumineuse de prédiction $Z_P$i, une seconde sous-étape 312 est mise en œuvre dans laquelle les seuils de segmentation sont modifiés de sorte à correspondre à la couleur blanche. En effet, cette dernière vérification permet de s'assurer que la fausse détection en était bien une et qu'il ne s'agissait pas là d'un phare de véhicule suiveur.

Cette seconde sous-étape 312 permet notamment de détecter des phares de véhicules suiveurs dont la lumière blanche peut contenir la couleur bleue par exemple.

Le procédé selon l'invention comporte ensuite une étape 400 de classification colorimétrique de chaque zone lumineuse $Z_L$i.

Cette étape 400 de classification permet de sélectionner les zones lumineuses $Z_L$i issues de l'étape 200 de segmentation. Pour chacune des couleurs un classifieur est entraîné (dans une étape d'entrainement préalable dite hors ligne) pour discriminer des données positives (représentatives de gyrophares à détecter) de données négatives (représentatives de tous les bruits issus de l'étape 200 de segmentation qui ne sont pas des gyrophares et qu'on ne souhaite par conséquent pas détecter, tels que des phares avant ou feux arrière de véhicules, des reflets du soleil, des feux de signalisation, etc).

Si lors de l'étape de classification une zone lumineuse $Z_L$i segmentée ne peut être classée (reconnue) par le classifieur, alors elle cette zone lumineuse est filtrée.

En revanche, si une zone lumineuse $Z_L$i est reconnue par le classifieur, elle est retenue comme étant un candidat sérieux pour être un gyrophare. A l'issu de l'étape 400 de classification, une liste de zones lumineuses candidates $Z_C$i est obtenue, ces zones lumineuses candidates $Z_C$i étant caractérisées par les paramètres suivants :

- un état de clignotement ;

- un indice de confiance de classification $I_{cc}$ ;

- une position dans l'image ;

- une couleur.

Le statut clignotant est obtenu par une détection du clignotement des gyrophares. Cette détection consiste en :

- un comptage du nombre d'images où le gyrophare est allumé et, par conséquent, où les zones lumineuses correspondantes $Z_L$5 et $Z_L$6 sont détectées (image I1 en référence à la figure 5a),
- un comptage du nombre d'images où le gyrophare est éteint et, par conséquent, où les zones lumineuses correspondantes $Z_L$5 et $Z_L$6 ne sont pas détectées (image I2 en référence à la figure 5b), et
- un comptage du nombre d'images où le gyrophare est allumé de nouveau et, par conséquent, où les zones lumineuses correspondantes $Z_L$5 et $Z_L$6 sont détectées de nouveau (image I3en référence à la figure 5c).

L'indice de confiance $I_{cc}$ est obtenu avec l'information de clignotement (état de clignotement) et de classification positive par le classifieur à l'étape 400. Selon un mode de réalisation, après l'étape 400 de classification, l'indice de confiance de chaque zone lumineuse segmentée $Z_L$i est mis à jour.

Si la classification est positive, la mise à jour de l'indice de confiance de classification $I_{cc}$ pour une image à un instant t se fait par rapport à un indice un de confiance de classification $I_{cc}$ pour une image à un instant t-1 se fait selon la formule suivante :

[Math 1]

$$Icc(t) = Icc(t-1) + FA$$

avec FA un facteur d'accroissement prédéterminé.

Si la classification est négative, la mise à jour de l'indice de confiance de classification $I_{cc}$ pour une image à un instant t se fait par rapport à un indice un de confiance de classification $I_{cc}$ pour une image à un instant t-1 se fait selon la formule suivante :

[Math 2]

$$Icc(t) = Icc(t-1) - FR$$

avec FR un facteur de réduction prédéterminé.

Les informations de position et de couleur sont, quant à elles, données par l'étape 200 de classification.

A l'issu de l'étape 400 de classification, afin de déterminer si une zone lumineuse candidate $Z_C i$ est susceptible d'être un gyrophare de véhicule d'urgence, le procédé comprend une étape d'analyse fréquentielle pour réaliser un calcul et un seuillage de la fréquence de clignotement de la zone lumineuse segmentée $Z_L i$ et une étape de calcul d'intégration dans le temps de la réponse du classifieur. Ces étapes sont détaillées ci-après.

Dans une étape 500, une analyse fréquentielle de chaque zone lumineuse $Z_L i$ segmentée permet de déterminer un caractère clignotant, ou non, de la zone lumineuse segmentée $Z_L i$.

Avantageusement, préalablement à cette étape 500 on procède à une correction d'incohérences que pourraient présenter les zones lumineuses segmentées $Z_L i$. Notamment, cette correction se fait sur la couleur, la taille ou encore l'intensité des zones lumineuses segmentées $Z_L i$. Si une trop grande fluctuation de couleur est détectée, par exemple si la zone lumineuse segmentée $Z_L i$ passe du rouge à l'orange d'une image à l'autre, alors ladite zone lumineuse segmentée $Z_L i$ est filtrée. Ou encore, si la taille de la zone lumineuse segmentée $Z_L i$ varie trop d'une image à l'autre (variation supérieure à deux, par exemple), alors ladite zone lumineuse segmentée $Z_L i$ est filtrée.

A partir de la détection des phases allumées et éteintes du gyrophare permettant de déterminer le clignotement, une transformation de Fourier rapide (FFT) de manière connue en soi, permet de déterminer la fréquence de ce clignotement.

Lors de l'étape 500 d'analyse fréquentielle, cette fréquence de clignotement de chaque zone lumineuse segmentée $Z_L i$ est comparée à un premier seuil de fréquence $S_F 1$ et à un second seuil de fréquence $S_F 2$ supérieur au premier seuil de fréquence $S_F 1$, prédéterminés. Si la fréquence de clignotement est inférieure au premier seuil de fréquence $S_F 1$, alors la zone lumineuse segmentée $Z_L i$ est considérée comme étant non clignotante et donc comme n'étant pas un gyrophare et est filtrée. Si la fréquence de clignotement est supérieure au second seuil de fréquence $S_F 2$, alors la zone lumineuse segmentée $Z_L i$ est également considérée comme n'étant pas un gyrophare et est filtrée.

Cette analyse fréquentielle du clignotement permet de filtrer les zones lumineuses segmentées $Z_L i$ dont on est sûrs qu'elles sont constantes ou qu'elles clignotent trop lentement, ou au contraire, qu'elles clignotent trop rapidement, pour être des gyrophares de véhicules prioritaires. Ainsi, sont conservées comme étant des candidats intéressants que les zones lumineuses segmentées $Z_L i$ présentent une fréquence de clignotement comprise entre les seuils de fréquence $S_F 1$ et $S_F 2$.

Selon un exemple de réalisation, le premier seuil de fréquence $S_F 1$ est égal à 1 Hz et le second seuil de fréquence $S_F 2$ est égal à 5 Hz. De plus, selon un exemple, les gyrophares qui équipent les véhicules de police et d'urgences ont une fréquence typiquement comprise entre 60 et 240 FPM. Le FPM (abrégé pour flash par minute) est une unité de mesure utilisée pour quantifier la fréquence de clignotement d'une lampe clignotante, correspondant au nombre de cycles se produisant en une minute. Une valeur mesurée en FPM peut être convertie en hertz en la divisant par 60. Soit, pour de tels véhicules prioritaires, leur fréquence est comprise entre 1 Hz et 6 Hz.

Ces valeurs de seuil de fréquence $S_F 1$ et $S_F 2$ permettent notamment :

- de s'adapter à la caméra (en effet, la rémanence de l'œil ne permet pas de voir que certaines lumières clignotent comme c'est le cas des lumières sur le toit des taxis, mais la résolution d'une caméra peut le détecter) ;

- d'obtenir un résultat plus robuste face aux erreurs éventuelles de l'étape 200 de segmentation.

Dans une étape facultative 600, une analyse directionnelle de chaque zone lumineuse segmentée $Z_L i$ est réalisée pour déterminer un déplacement de ladite zone lumineuse segmentée $Z_L i$ par rapport au véhicule 1 grâce au suivi de cette dernière dans la séquence d'images acquises par la caméra. Ainsi, si une zone lumineuse segmentée $Z_L i$ s'éloigne du véhicule 1 (autrement dit si la zone lumineuse segmentée $Z_L i$ se rapproche du point de fuite F ou de la ligne d'horizon H dans l'image) alors la zone lumineuse segmentée $Z_L i$ est filtrée. Ceci pourrait également être le cas si la zone lumineuse segmentée $Z_L i$ est immobile. Cette étape permet notamment de filtrer des zones lumineuses segmentées $Z_L i$ qui correspondraient effectivement à des gyrophares mais de véhicules prioritaires se déplaçant dans un sens opposé à celui du véhicule 1 de sorte que le véhicule 1 n'a pas à considérer ces véhicules prioritaires. Cette étape permet encore de filtrer les feux arrière des voitures circulant dans une voie opposée à celle du véhicule 1.

Cette étape permet d'améliorer les performances de détection (vrais positifs et faux positifs) des gyrophares de véhicules d'urgence en fusionnant les informations relatives aux zones lumineuses segmentées $Z_L i$. En effet, en étudiant les zones lumineuses segmentées $Z_L i$ dans leur globalité (dans l'ensemble de l'image de la séquence d'images) et non individuellement, il est possible de réduire le taux de faux positifs en conservant un taux de détection satisfaisant.

A cette étape du procédé, un ensemble de zones lumineuses segmentées $Z_L i$ sont détectées dans l'image de la séquence d'image. Ces zones lumineuses segmentées $Z_L i$ détectées sont mémorisées dans une mémoire du calculateur 3 sous forme d'une liste comprenant un identifiant associé à chaque zone lumineuse segmentée $Z_L i$ ainsi que des paramètres de ces zones lumineuses segmentées $Z_L i$, telles que :

- leur position dans l'image ;

- leur taille ;

- leur couleur ;

- leur intensité ;

- leur état de clignotement ;

- l'indice de confiance de la classification $I_{CC}$ qui leur est associé.

A cette étape, toutes les zones lumineuses segmentées $Z_L$i détectées et retenues sont considérées comme de potentiels gyrophares de véhicules d'urgence. Afin de déterminer la présence ou l'absence de gyrophares de véhicules d'urgence dans la scène (environnement arrière du véhicule correspondant à la séquence d'images acquise par la caméra 2), Le procédé comprend enfin une étape 700 d'analyse de la scène consistant en un calcul d'un indice de confiance global $I_{CG}$ de chaque image de la séquence d'images, pour chacune des couleurs rouge, orange, bleu et violet. Selon un exemple de réalisation, les indices de confiances globaux peuvent être regroupés par couleur. Par exemple, l'indice de confiance de la couleur violet est intégré à l'indice de confiance de la couleur bleu.

Pour cela, un indice de confiance instantané $I_{Ci}$ est calculé à chaque image de la séquence d'images et pour chacune des couleurs rouge, orange, bleu et violet.

La confiance instantanée est calculée à partir des paramètres des zones lumineuses segmentées $Z_L$i de l'image courante de la séquence d'image. Les zones lumineuses segmentées $Z_L$i avec un état de clignotement et un indice de confiance de classification $I_{CC}$ suffisante sont d'abord prises en compte.

Pour déterminer les zones lumineuses segmentées $Z_L$i présentant un indice de confiance de classification $I_{CC}$ suffisante pour être prise en compte, une machine d'état sous forme d'hystérésis est illustré à la figure 7.

L'état de la zone lumineuse $Z_L$i est initialisé (Ei) à l'état « OFF » :

- le passage de l'état « OFF » à l'état « ON » se faisant si l'indice de confiance de classification $I_{CC}$ est supérieur à un seuil prédéterminé C3 ;

- le passage de l'état « ON » à l'état « OFF » se faisant si l'indice de confiance de classification $I_{CC}$ est inférieur à un seuil prédéterminé C4. Un exemple de calcul de cet indice de confiance instantané $I_{Ci}$ pour une image et pour une couleur pourrait être la somme des indices de confiance de classification $I_{CC}$ de toutes les zones lumineuses segmentées $Z_L$i détectées dans l'image de la séquence d'images, pour cette couleur. Par exemple, pour la couleur rouge :

[Math 3]

$$Ici(Rouge) = \sum Icc(Rouge)$$

Cette confiance instantanée est ensuite filtrée dans le temps afin d'obtenir un indice de confiance globale pour chaque image de la séquence d'images et pour chacune des couleurs rouge, orange, bleu et violet, selon la formule suivante :

[Math4]

$$ICG(t) = (1 - \alpha) * ICG(t - 1) + \alpha * Ici$$

- Ici étant l'indice de confiance instantané de la couleur considérée ;

- $\alpha$ étant un coefficient prédéterminé, associé à une couleur, et permettant de déterminer le poids de l'indice de confiance instantanée Ici dans le calcul de l'indice de confiance globale $I_{CG}$, par exemple, la valeur du coefficient $\alpha$ est comprise entre 0 et 1, et de préférence entre 0,02 et 0,15.

Plus la valeur du coefficient $\alpha$ est élevée, plus le poids de l'indice de confiance instantanée Ici dans le calcul de l'indice de confiance global $I_{CG}$ est important.

Selon un exemple de réalisation, le coefficient $\alpha$ varie selon les paramètres des zones lumineuses segmentées $Z_L i$. Par exemple, le coefficient $\alpha$ est :

- augmenté lorsque plusieurs zones lumineuses segmentées $Z_L i$ présentent un indice de confiance de classification $I_{CC}$ supérieur à seuil prédéterminé ;

- diminué lorsque le calculateur 3 indique déjà la présence d'un véhicule d'urgence dans la scène, ce qui permet de stabiliser et de robustifier le résultat du procédé en cas de perte de détection momentanée dans la chaîne de détection des zones lumineuses segmentées ZLi, cette perte de détection momentanée pouvant être, par exemple, le fait d'une occlusion, d'une luminosité trop importante ou d'un bruit de mesure trop important.

Selon un exemple de réalisation, le coefficient $\alpha$ varie en fonction de la position des zones lumineuses segmentées $Z_L i$ dans l'image. Notamment, le coefficient $\alpha$ est :

- diminué si l'image comporte une zones lumineuses segmentées $Z_L i$ isolée positionnée en-dessous de la ligne d'horizon H (autrement dit, la vitesse d'intégration sera faible) ;

- augmenté si une pluralité de zones lumineuses segmentées $Z_L i$ sont positionnées au-dessus de la ligne d'horizon H (ce qui correspond à une grande vitesse d'intégration).

Selon un exemple de réalisation, le coefficient $\alpha$ varie en fonction de la position relatives des zones lumineuses segmentées $Z_L i$, les unes par rapport aux autres, dans l'image. Notamment, le coefficient $\alpha$ est augmenté si plusieurs zones lumineuses segmentées $Z_L i$ sont alignées sur une même ligne L.

Les variations du paramètre $\alpha$ permettent de régler la sensibilité du procédé et ainsi de détecter plus ou moins rapidement, les évènements selon les paramètres des zones lumineuses segmentées $Z_L i$.

Il est encore possible d'attribuer un poids à chaque zone lumineuse segmentée $Z_L i$ de l'image courante de la séquence d'image qui dépend des autres paramètres, par exemple :

- la valeur de ce poids est diminuée si la zone lumineuse segmentée $Z_L i$ est de petite taille (autrement dit présentant une taille inférieure à 20 pixels par exemple) et/ou proche de la ligne d'horizon H ;

- la valeur de ce poids est diminuée si la zone lumineuse segmentée est peu lumineuse (présentant par exemple une intensité lumineuse inférieure à 1000 lux) ;

- la valeur de ce poids est diminuée si la couleur de la lumière n'est pas nette (par exemple, en cas de lumière blanche saturée) ;

- la valeur de ce poids est augmentée si la zone lumineuse segmentée $Z_L i$ est proche d'autres zones lumineuses segmentées $Z_L i$ similaires (en termes de taille, position, intensité, couleur).

Ce poids permet d'accélérer l'augmentation de l'indice de confiance globale $I_{CG}$ lorsque plusieurs zones lumineuses segmentées $Z_L i$ ont des positions, luminosités et couleurs fortement corrélées. Le fait de ralentir l'augmentation de l'indice de confiance globale $I_{CG}$ lorsque les lumières sont de petite taille et d'intensité moindre permet de réduire le taux de faux positifs, bien que cela entraine une détection plus lente des véhicules d'urgence lointains, ce qui est acceptable.

L'étape 700 permet de réduire sensiblement le taux de faux positifs détecté tout en conservant des taux de détections de gyrophares de véhicules d'urgence satisfaisants.

A l'issu de l'étape 700 il est possible, pour le calculateur 3, d'indiquer la présence d'un véhicule d'urgence dans l'environnement arrière du véhicule 1, correspondant à la séquence d'images acquises par la caméra 2, et notamment de déclarer qu'une zone lumineuse $Z_L i$ est un gyrophare de véhicule d'urgence, par exemple à l'aide d'un seuil hystérésis connu en soi.

Une machine d'état sous forme d'hystérésis est illustrée à la figure 6.

L'état de la zone lumineuse $Z_L i$ est initialisé (Ei) à l'état « OFF » :

- le passage de l'état « OFF » à l'état « ON » se faisant si l'indice de confiance global ICG est supérieur à un seuil prédéterminé C1 ;

- le passage de l'état « ON » à l'état « OFF » se faisant si l'indice de confiance global ICG est supérieur à un seuil prédéterminé C2.

Le véhicule (dans le cas d'un véhicule autonome) ou le conducteur du véhicule 1 sinon, pouvant alors prendre les mesures nécessaires pour faciliter et ne pas entraver le déplacement dudit véhicule d'urgence.

**Revendications**

1.   Procédé de traitement d'un flux vidéo d'images capturées par au moins une caméra couleur (2) embarquée dans un véhicule (1) automobile, lesdites images étant exploitées par un calculateur (3) embarqué dans ledit véhicule pour détecter un véhicule prioritaire (4) situé dans l'environnement du véhicule (1), l'au moins une caméra étant orientée vers l'arrière du véhicule, ledit procédé étant **caractérisé en ce qu'**il comporte les étapes suivantes :

    - une étape (100) d'acquisition d'une séquence d'images ;

    pour chaque image de la séquence d'images :

        - une étape (200) de segmentation colorimétrique par seuillage permettant la détection de zones lumineuses colorées (ZLi) de l'image susceptibles d'être des gyrophares (5, 6) ;
        - une étape (300) de suivi de chaque zone lumineuse (ZLi) segmentée selon laquelle chaque zone lumineuse segmentée lors de l'étape de segmentation (200) est associée à une zone lumineuse de prédiction (ZPi) de même couleur ;
        - une étape (400) de classification colorimétrique, par un classifieur préalablement entrainé, de chaque zone lumineuse (ZLi) segmentée ;
        - une étape (500) d'analyse fréquentielle de chaque zone lumineuse (ZLi) segmentée permettant de déterminer un caractère clignotant de ladite zone segmentée ;
        - une étape (700) de calcul d'un indice de confiance global (ICG) de chaque image de la séquence d'images, prenant en compte un indice de confiance de classification issu de l'étape de classification colorimétrique (400), permettant de déclarer une zone lumineuse segmentée (ZLi) comme étant un gyrophare.

2.   Procédé selon la revendication 1, **caractérisé en ce que**, lors de l'étape (200) de segmentation, des seuils de segmentation prédéfinis sont utilisés de sorte à segmenter les zones lumineuses (ZLi) selon quatre catégories :

        - la couleur rouge,
        - la couleur orange,
        - la couleur bleue, et
        - la couleur violette.

3.   Procédé selon l'une des revendications 1 ou 2, **caractérisé en ce que**, après l'étape (200) de segmentation, le procédé comporte encore une étape (210) de filtrage dite de post-segmentation permettant de filtrer les résultats issus de l'étape (200) de segmentation, cette étape de post-segmentation étant réalisée selon des critères de position, et/ou de taille et/ou de couleur et/ou d'intensité prédéterminés.

4.   Procédé selon la revendication 3, **caractérisé en ce que** l'étape (210) de post-segmentation, comprend une sous étape (211) de filtrage dimensionnel dans laquelle les zones lumineuses ($Z_Li$) situées dans des parties de l'image éloignées d'une ligne d'horizon (H) et d'un point de fuite (F) et présentant une taille inférieure à un seuil dimensionnel prédéterminé sont filtrées.

5.   Procédé selon la revendication 3, **caractérisé en ce que** l'étape (210) de post-segmentation) comprend une sous étape (212) de filtrage des zones lumineuses ($Z_Li$) présentant une taille supérieure à un seuil dimensionnel prédéterminé et une intensité lumineuse inférieure à un seuil d'intensité lumineuse prédéterminé.

6.   Procédé selon la revendication 3, **caractérisé en ce que** l'étape (210) de post-segmentation comprend une sous étape (213) de filtrage positionnel dans laquelle les zones lumineuses ($Z_Li$) positionnées en-dessous d'une ligne d'horizon (H) définie sur l'image de la séquence d'images sont filtrées.

7.   Procédé selon la revendication 3, **caractérisé en ce que** l'étape (210) de post-segmentation comprend, pour une zone lumineuse ($Z_L$i) segmentée, une sous étape (215) de filtrage par seuillage chromatique orienté.

8. Procédé selon l'une quelconque des revendications précédentes, **caractérisé en ce qu'**il comprend encore une étape (310) de seconde segmentation, à l'issue de l'étape de suivi (300), pour chaque zone lumineuse ($Z_L$i) segmentée pour laquelle aucune association n'a été trouvée.

9. Procédé selon la revendication 8, **caractérisé en ce que** l'étape (310) de seconde segmentation comprend :

   - une première sous étape (311) dans laquelle les seuils de segmentation sont élargis et les étapes de segmentation (200) et de suivi (300) sont renouvelées pour chaque image de la séquence d'images, avec ces nouveaux seuils de segmentation élargis, les seuils de segmentation étant ceux correspondant à la couleur de la zone lumineuse segmentée, et
   - si à l'issu de cette première sous étape aucune association n'a été trouvée, une seconde sous étape (312) dans laquelle les seuils de segmentation sont modifiés de sorte à correspondre à ceux de la couleur blanche.

10. Procédé selon l'une quelconque des revendications précédentes, **caractérisé en ce que**, lors de l'étape (500) d'analyse fréquentielle, une fréquence de clignotement de chaque zone lumineuse ($Z_L$i) segmentée est comparée à un premier seuil de fréquence ($S_F1$) et à un second seuil de fréquence ($S_F2$) supérieur au premier seuil de fréquence ($S_F1$), prédéterminés, une zone lumineuse ($Z_L$i) segmentée étant filtrée si :

   - sa fréquence de clignotement est inférieure au premier seuil de fréquence ($S_F1$), de sorte que la zone lumineuse segmentée est considérée comme étant non clignotante ou faiblement clignotante et donc comme n'étant pas un gyrophare ;
   - sa fréquence de clignotement est supérieure au second seuil de fréquence ($S_F2$), de sorte que la zone lumineuse également considérée comme n'étant pas un gyrophare.

11. Procédé selon la revendication 10, **caractérisé en ce que** le premier seuil de fréquence ($S_F1$) est égal à 1 Hz et le second seuil de fréquence ($S_F2$) est égal à 5 Hz.

12. Procédé selon l'une quelconque des revendications 1 à 11, **caractérisé en ce qu'**il comprend encore une étape (600) d'analyse directionnelle de chaque zone lumineuse ($Z_L$i) segmentée permettant de déterminer un déplacement de ladite zone lumineuse segmentée

13. Procédé selon la revendication précédente, **caractérisé en ce qu'**une zone lumineuse ($Z_L$i) segmentée est filtrée si la direction de déplacement obtenue lors de l'étape (600) d'analyse directionnelle permet de conclure à :

   - une immobilisation de la zone lumineuse ($Z_L$i) segmentée, par rapport au véhicule (1) ;
   - un éloignement de la zone lumineuse ($Z_L$i) segmentée, par rapport au véhicule (1).

14. Produit programme d'ordinateur, comprenant des instructions pour la mise en œuvre d'un procédé comprenant :

   - une étape (100) d'acquisition d'une séquence d'images ;

   pour chaque image de la séquence d'images :

   - une étape (200) de segmentation colorimétrique par seuillage permettant la détection de zones lumineuses ($Z_L$i) colorées de l'image susceptibles d'être des gyrophares (5, 6) ;
   - une étape (300) de suivi de chaque zone lumineuse ($Z_L$i) segmentée selon laquelle chaque zone lumineuse ($Z_L$i) segmentée lors de l'étape de segmentation (200) est associée à une zone lumineuse de prédiction ($Z_P$i) de même couleur ;
   - une étape (400) de classification colorimétrique, par un classifieur préalablement entrainé, de chaque zone lumineuse ($Z_L$i) segmentée ;
   - une étape (500) d'analyse fréquentielle de chaque zone lumineuse ($Z_L$i) segmentée permettant de déterminer un caractère clignotant de la zone lumineuse segmentée ;
   - une étape (700) de calcul d'un indice de confiance global ($I_{CG}$) de chaque image de la séquence d'images, prenant en compte un indice de confiance de classification issu de l'étape de classification colorimétrique, permettant de déclarer une zone lumineuse ($Z_L$i) comme étant un gyrophare, lorsqu'il est mis en œuvre par un calculateur.

**15.** Véhicule (1), comprenant au moins une caméra couleur (2) orientée vers l'arrière du véhicule et apte à acquérir un flux vidéo d'images d'un environnement arrière du véhicule et au moins un calculateur (3), le calculateur (3) étant configuré pour mettre en œuvre :

- une étape (100) d'acquisition d'une séquence d'images ;

pour chaque image de la séquence d'images :

- une étape (200) de segmentation colorimétrique par seuillage permettant la détection de zones lumineuses ($Z_L$i) colorées de l'image susceptibles d'être des gyrophares (5, 6) ;
- une étape (300) de suivi de chaque zone lumineuse ($Z_L$i) segmentée selon laquelle chaque zone lumineuse ($Z_L$i) segmentée lors de l'étape (200) de segmentation est associée à une zone lumineuse de prédiction ($Z_P$i) de même couleur ;
- une étape (400) de classification colorimétrique, par un classifieur préalablement entrainé, de chaque zone lumineuse ($Z_L$i) segmentée ;
- une étape (500) d'analyse fréquentielle de chaque zone lumineuse ($Z_L$i) segmentée permettant de déterminer un caractère clignotant de la zone lumineuse segmentée ;
- une étape (700) de calcul d'un indice de confiance global ($I_{CG}$) de chaque image de la séquence d'images, prenant en compte un indice de confiance de classification issu de l'étape de classification colorimétrique, permettant de déclarer une zone lumineuse segmentée ($Z_L$i) comme étant un gyrophare.

**Patentansprüche**

**1.** Verfahren zur Verarbeitung eines Videostroms von Bildern, die von mindestens einer in einem Kraftfahrzeug (1) integrierten Farbkamera (2) aufgenommen werden, wobei die Bilder von einem im Fahrzeug integrierten Rechner (3) ausgewertet werden, um ein Fahrzeug mit Vorfahrt (4) zu erkennnen, das sich in der Umgebung des Fahrzeugs (1) befindet, wobei die mindestens eine Kamera zur Rückseite des Fahrzeugs ausgerichtet ist, wobei das Verfahren **dadurch gekennzeichnet ist, dass** es die folgenden Schritte beinhaltet:

- einen Schritt (100) zum Erfassen einer Bildsequenz;
für jedes Bild in der Bildsequenz:

- einen Schritt (200) zum kolorimetrischen Segmentieren durch Schwellenwertbildung, der das Erkennen farbiger Leuchtbereiche (ZLi) des Bildes ermöglicht, die Rundum-Signalleuchten (5, 6) sein könnten;
- einen Schritt (300) zum Verfolgen jedes segmentierten Leuchtbereichs (ZLi), wobei jeder beim Segmentierungsschritt (200) segmentierte Leuchtbereich einem Vorhersage-Leuchtbereich (ZPi) gleicher Farbe zugeordnet ist;
- einen Schritt (400) zum kolorimetrischen Klassifizieren durch einen zuvor trainierten Klassifikator jedes segmentierten Leuchtbereichs (ZLi);
- einen Schritt (500) zur Frequenzanalyse jedes segmentierten Leuchtbereichs (ZLi), der es ermöglicht, eine blinkende Beschaffenheit des segmentierten Bereichs zu bestimmen;

einen Schritt (700) zum Berechnen eines Gesamt-Konfidenzindex (ICG) für jedes Bild der Bildsequenz unter Berücksichtigung eines aus dem kolorimetrischen Klassifizierungsschritt (400) stammenden Klassifizierungs-Konfidenzindex, der es ermöglicht, einen segmentierten Leuchtbereich (ZLi) als Rundum-Signalleuchte zu deklarieren.

**2.** Verfahren nach Anspruch 1, **dadurch gekennzeichnet, dass** beim Segmentierungsschritt (200) vordefinierte Segmentierungsschwellenwerte verwendet werden, um die Leuchtbereiche (ZLi) in vier Kategorien zu segmentieren:

die Farbe Rot,
die Farbe Orange,
die Farbe Blau, und
die Farbe Violett.

**3.** Verfahren nach einem der Ansprüche 1 oder 2, **dadurch gekennzeichnet, dass** das Verfahren nach dem Segmentierungsschritt (200) noch einen Schritt (210) zum Filtern, Nachsegmentierungsschritt genannt, beinhaltet, der es ermöglicht, die aus dem Segmentierungsschritt (200) stammenden Ergebnisse zu filtern, wobei dieser Nachsegmentierungsschritt gemäß Kriterien für vorbestimmte Position und/oder Größe und/oder Farbe und/oder Intensität ausgeführt wird.

4. Verfahren nach Anspruch 3, **dadurch gekennzeichnet, dass** der Nachsegmentierungsschritt (210) einen Teilschritt (211) zur Dimensionsfilterung umfasst, bei dem Leuchtbereiche ($Z_L$i), die sich in Teilen des Bildes befinden, die von einer Horizontlinie (H) und einem Fluchtpunkt (F) entfernt sind, und eine Größe kleiner als ein vorbestimmter Dimensionsschwellenwert aufweisen, gefiltert werden.

5. Verfahren nach Anspruch 3, **dadurch gekennzeichnet, dass** der Nachsegmentierungsschritt (210) einen Teilschritt (212) zum Filtern der Leuchtbereiche ($Z_L$i) umfasst, die eine Größe größer als ein vorbestimmter Dimensionsschwellenwert, und eine Leuchtintensität kleiner als ein vorbestimmter Leuchtintensitätsschwellenwert aufweisen.

6. Verfahren nach Anspruch 3, **dadurch gekennzeichnet, dass** der Nachsegmentierungsschritt (210) einen Teilschritt (213) zur Positionsfilterung umfasst, bei dem die Leuchtbereiche ($Z_L$i), die unterhalb einer auf dem Bild der Bildsequenz definierten Horizontlinie (H) positioniert sind, gefiltert werden.

7. Verfahren nach Anspruch 3, **dadurch gekennzeichnet, dass** der Nachsegmentierungsschritt (210) für einen segmentierten Leuchtbereich ($Z_L$i) einen Teilschritt (215) zur ausgerichteten chromatischen Schwellenwertbildung umfasst.

8. Verfahren nach einem der vorstehenden Ansprüche, **dadurch gekennzeichnet, dass** es weiter einen zweiten Segmentierungsschritt (310) nach Abschluss des Schrittes zum Verfolgen (300) für jeden segmentierten Leuchtbereich ($Z_L$i) umfasst, für den keine Zuordnung gefunden worden ist.

9. Verfahren nach Anspruch 8, **dadurch gekennzeichnet, dass** der zweite Segmentierungsschritt (310) umfasst:

einen ersten Teilschritt (311), bei dem die Segmentierungsschwellenwerte erweitert und die Schritte zum Segmentieren (200) und Verfolgen (300) für jedes Bild in der Bildsequenz mit diesen neuen, erweiterten Segmentierungsschwellenwerten erneuert werden, wobei die Segmentierungsschwellenwerte jene sind, die der Farbe des segmentierten Leuchtbereichs entsprechen, und
wenn nach Abschluss dieses ersten Teilschritts keine Zuordnung gefunden worden ist, einen zweiten Teilschritt (312), bei dem die Segmentierungsschwellenwerte modifiziert werden, um jenen der Farbe Weiß zu entsprechen, durchgeführt wird.

10. Verfahren nach einem der vorstehenden Ansprüche, **dadurch gekennzeichnet, dass** beim Schritt (500) der Frequenzanalyse eine Blinkfrequenz jedes segmentierten Leuchtbereichs ($Z_L$i) mit einem ersten vorbestimmten Frequenzschwellenwert ($S_F$1) und einem zweiten vorbestimmten Frequenzschwellenwert ($S_F$2), der höher als der erste Frequenzschwellenwert ($S_F$1) ist, verglichen wird, wobei ein segmentierte Leuchtbereich ($Z_L$i) gefiltert wird, wenn:

seine Blinkfrequenz geringer als der erste Frequenzschwellenwert ($S_F$1) ist, sodass der segmentierte Leuchtbereich als nicht oder schwach blinkend, und somit nicht als Rundum-Signalleuchte betrachtet wird;
seine Blinkfrequenz höher als der erste Frequenzschwellenwert ($S_F$2) ist, sodass der segmentierte Leuchtbereich auch nicht als Rundum-Signalleuchte betrachtet wird.

11. Verfahren nach Anspruch 10, **dadurch gekennzeichnet, dass** der erste Frequenzschwellenwert ($S_F$1) gleich 1 Hz ist und der zweite Frequenzschwellenwert ($S_F$2) gleich 5 Hz ist.

12. Verfahren nach einem der Ansprüche 1 bis 11, **dadurch gekennzeichnet, dass** es weiter einen Schritt (600) zur Richtungsanalyse jedes segmentierten Leuchtbereichs ($Z_L$i) umfasst, der es ermöglicht, eine Verlagerung des segmentierten Leuchtbereichs zu bestimmen.

13. Verfahren nach dem vorstehenden Anspruch, **dadurch gekennzeichnet, dass** ein segmentierter Leuchtbereich ($Z_L$i) gefiltert wird, wenn die beim Schritt (600) zur Richtungsanalyse erhaltene Verlagerungsrichtung den Schluss ermöglicht zu:

einer Immobilisierung des segmentierten Leuchtbereichs ($Z_L$i) in Bezug zum Fahrzeug (1);

einer Entfernung des segmentierten Leuchtbereichs ($Z_L$i) in Bezug zum Fahrzeug (1).

**14.** Computerprogrammprodukt, das Anweisungen zur Umsetzung eines Verfahrens umfasst, umfassend:

einen Schritt (100) zum Erfassen einer Bildsequenz;
für jedes Bild in der Bildsequenz:

einen Schritt (200) zum kolorimetrischen Segmentieren durch Schwellenwertbildung, der das Erkennen farbiger Leuchtbereiche ($Z_L$i) des Bildes ermöglicht, die Rundum-Signalleuchten (5, 6) sein könnten ;
einen Schritt (300) zum Verfolgen jedes segmentierten Leuchtbereichs ($Z_L$i), wobei jeder beim Segmentierungsschritt (200) segmentierte Leuchtbereich ($Z_L$i) einem Vorhersage-Leuchtbereich ($Z_P$i) gleicher Farbe zugeordnet ist;
einen Schritt (400) zum kolorimetrischen Klassifizieren durch einen zuvor trainierten Klassifikator jedes segmentierten Leuchtbereichs ($Z_L$i);
einen Schritt (500) zur Frequenzanalyse jedes segmentierten Leuchtbereichs ($Z_L$i), der es ermöglicht, eine blinkende Beschaffenheit des segmentierten Leuchtbereichs zu bestimmen;
einen Schritt (700) zum Berechnen eines Gesamt-Konfidenzindex ($I_{CG}$) für jedes Bild der Bildsequenz unter Berücksichtigung eines aus dem kolorimetrischen Klassifizierungsschritt stammenden Klassifizierungs-Konfidenzindex, der es ermöglicht, einen Leuchtbereich ($Z_L$i) als Rundum-Signalleuchte zu deklarieren, wenn er von einem Rechner umgesetzt wird.

**15.** Fahrzeug (1), das mindestens eine zur Rückseite des Fahrzeugs ausgerichtete Farbkamera (2) umfasst, und die imstande ist, einen Videostrom von Bildern einer hinteren Umgebung des Fahrzeugs zu erfassen, und mindestens einen Rechner (3), wobei der Rechner (3) konfiguriert ist, um umzusetzen:

einen Schritt (100) zum Erfassen einer Bildsequenz;
für jedes Bild in der Bildsequenz:

einen Schritt (200) zum kolorimetrischen Segmentieren durch Schwellenwertbildung, der das Erkennen farbiger Leuchtbereiche ($Z_L$i) des Bildes ermöglicht, die Rundum-Signalleuchten (5, 6) sein könnten;
einen Schritt (300) zum Verfolgen jedes segmentierten Leuchtbereichs ($Z_L$i), wobei jeder beim Schritt (200) zum Segmentieren segmentierte Leuchtbereich ($Z_L$i) einem Vorhersage-Leuchtbereich ($Z_P$i) gleicher Farbe zugeordnet ist;
einen Schritt (400) zum kolorimetrischen Klassifizieren durch einen zuvor trainierten Klassifikator jedes segmentierten Leuchtbereichs ($Z_L$i);
einen Schritt (500) zur Frequenzanalyse jedes segmentierten Leuchtbereichs ($Z_L$i), der es ermöglicht, eine blinkende Beschaffenheit des segmentierten Leuchtbereichs zu bestimmen;
einen Schritt (700) zum Berechnen eines Gesamt-Konfidenzindex ($I_{CG}$) für jedes Bild der Bildsequenz unter Berücksichtigung eines aus dem kolorimetrischen Klassifizierungsschritt stammenden Klassifizierungs-Konfidenzindex, der es ermöglicht, einen segmentierten Leuchtbereich ($Z_L$i) als Rundum-Signalleuchte zu deklarieren.

**Claims**

**1.** Method for processing a video stream of images captured by at least one colour camera (2) on board a motor vehicle (1), said images being used by a computer (3) on board the vehicle to detect a priority vehicle (4) located in the vicinity of the vehicle (1), the at least one camera being directed towards the rear of the vehicle, the method being **characterized in that** it comprises the following steps:

- a step (100) of acquiring a sequence of images;

for each image of the sequence of images:

- a step (200) of performing thresholding-based colourimetric segmentation, making it possible to detect coloured light areas (ZLi) of the images that are likely to be revolving lights (5, 6);
- a step (300) of tracking each segmented light area (ZLi), according to which each light area segmented during the segmentation step (200) is associated with a prediction light area (ZPi) of the same colour;

- a step (400) of colour classification, by a previously trained classifier, of each segmented light area (ZLi);
- a step (500) of frequency analysis of each segmented light area (ZLi) to determine a flashing characteristic of said segmented area;
- a step (700) of calculating an overall confidence index (ICG) for each image in the image sequence, taking into account a classification confidence index obtained from the colour classification step (400), which allows a segmented light area (ZLi) to be declared as a revolving light.

2. Method as claimed in claim 1, **characterized in that**, in the segmentation step (200), predefined segmentation thresholds are used so as to segment the light areas (ZLi) according to four categories:

- the colour red,
- the colour orange,
- the colour blue, and
- the colour violet.

3. Method according to any of claims 1 or 2, **characterized in that**, after the segmentation step (200), the method further comprises a post-segmentation filtering step (210) for filtering the results obtained from the segmentation step (200), this post-segmentation stage being carried out according to the predetermined criteria of position, and/or size, and/or colour, and/or intensity.

4. Method according to claim 3, **characterized in that** the post-segmentation step (210) comprises a dimensional filtering sub-step (211) wherein the bright areas ($Z_L i$) located in parts of the image far from a horizon line (H) and from a vanishing point (F) and having a size smaller than a predetermined dimensional threshold are filtered out.

5. Method as claimed in claim 3, **characterized in that** the post-segmentation step (210) comprises a sub-step (212) of filtering light areas ($Z_L i$) having a size greater than a predetermined dimensional threshold and a light intensity less than a predetermined light intensity threshold.

6. Method as claimed in claim 3, **characterized in that** the post-segmentation step (210) comprises a positional filtering sub-step (213) in which light areas ($Z_L i$) positioned below a horizon line (H) defined on the image of the sequence of images are filtered.

7. Method as claimed in claim 3, **characterized in that** the post-segmentation step (210) comprises, for a segmented light area ($Z_L i$), a sub-step (215) of performing oriented chromatic thresholding-based filtering.

8. Method as claimed in any one of the preceding claims, **characterized in that** it furthermore comprises a second segmentation step (310), at the end of the tracking step (300), for each segmented light area ($Z_L i$) for which no association was found.

9. Method as claimed in claim 8, **characterized in that** the second segmentation step (310) comprises:

- a first sub-step (311) in which the segmentation thresholds are widened, and the segmentation (200) and tracking (300) steps are repeated for each image of the sequence of images with these new widened segmentation thresholds, the segmentation thresholds being those corresponding to the colour of the segmented light area, and
- if, at the end of this first sub-step, no association has been found, a second sub-step (312), in which the segmentation thresholds are modified so as to correspond to those of the colour white.

10. Method according to any one of the foregoing claims, **characterized in that**, during the frequency analysis step (500), a flashing frequency of each segmented light area ($Z_L i$) is compared with a first frequency threshold ($S_F 1$) and with a second frequency threshold ($S_F 2$) greater than the first frequency threshold ($S_F 1$), both thresholds being predetermined, a segmented light area ($Z_L i$) being filtered if:

- its flashing frequency is less than the first frequency threshold ($S_F 1$), such that the segmented light area is considered not to be flashing or weakly flashing, and therefore not to be a revolving light;
- its flashing frequency is greater than the second frequency threshold ($S_F 2$), such that the light area is also considered not to be a revolving light.

EP 4 229 544 B1

11. Method as claimed in claim 10, **characterized in that** the first frequency threshold ($S_F1$) is equal to 1 Hz and the second frequency threshold ($S_F2$) is equal to 5 Hz.

12. Method according to any of claims 1 to 11, **characterized in that** it further comprises a step (600) of directional analysis of each segmented light area ($Z_L i$) to determine a movement of said segmented light area.

13. Method as claimed in the preceding claim, **characterized in that** a segmented light area ($Z_L i$) is filtered if the displacement direction obtained in the directional analysis step (600) makes it possible to conclude as to:

- immobilization of the segmented light area ($Z_L i$), with respect to the vehicle (1);
- moving away of the segmented light area ($Z_L i$), with respect to the vehicle (1).

14. A computer program product, comprising instructions for implementing a method comprising:

- a step (100) of acquiring a sequence of images;

for each image of the sequence of images:

- a step (200) of performing thresholding-based colourimetric segmentation, making it possible to detect coloured light areas ($Z_L i$) of the image that are likely to be rotating lights (5, 6);
- a step (300) of tracking each segmented light area ($Z_L i$), according to which each segmented light area ($Z_L i$) in the segmentation step (200) is associated with a prediction light area ($Z_P i$) of the same colour;
- a step (400) of performing colourimetric classification, using a previously trained classifier, of each segmented light area ($Z_L i$);
- a step (500) of performing frequency analysis of each segmented light area ($Z_L i$), making it possible to determine a flashing nature of the segmented light area;
- a step (700) of calculating an overall confidence index ($I_{CG}$) for each image in the image sequence, taking into account a classification confidence index obtained from the colour classification step, enabling a light area ($Z_L i$) to be declared as a revolving light, when implemented by a computer.

15. Vehicle (1), comprising at least one colour camera (2) oriented towards the rear of the vehicle and capable of acquiring a video stream of images of the rear environment of the vehicle, and at least one computer (3), the computer (3) being configured to implement:

- a step (100) of acquiring a sequence of images;

for each image of the sequence of images:

- a colour segmentation step (200) using thresholding to detect coloured light areas ($Z_L i$) in the image that are likely to be revolving lights (5, 6);
- a step (300) of tracking each segmented light area ($Z_L i$), according to which each light area ($Z_L i$) segmented in the segmentation step (200) is associated with a prediction light area ($Z_P i$) of the same colour;
- a step (400) of performing colourimetric classification, by a previously trained classifier, of each segmented light area ($Z_L i$);
- a step (500) of performing frequency analysis of each segmented light area ($Z_L i$), making it possible to determine a flashing nature of the segmented light area;
- a step (700) of calculating an overall confidence index ($I_{CG}$) for each image in the image sequence, taking into account a classification confidence index obtained from the colour classification step, enabling a segmented luminous area ($Z_L i$) to be declared as a revolving light.

18

Figure 1

Figure 2

Figure 3

Figure 4

Figure 5a

Figure 5b

Figure 5c

Figure 6

Figure 7

Figure 8

**RÉFÉRENCES CITÉES DANS LA DESCRIPTION**

**Documents brevets cités dans la description**

- EP 2523173 A1